# EUROPEAN PATENT APPLICATION

(11) **EP 4 268 658 A1**
(43) Date of publication of application: **01.11.2023**
(21) Application number: 23168790.6
(22) Date of filing: 19.04.2023
(51) Int. Cl.: A42B 3/22, B64G 6/00

(54) **PHOTOCHROMATIC TRANSITION GLASS FOR A HELMET OF A SPACE SUIT**

(30) Priority: 27.04.2022 US 202217730460
(71) Applicant: Hamilton Sundstrand Corporation, Charlotte, NC 28217-4578 (US)
(72) Inventor: LUKER, Kelly, Glastonbury, CT (US)
(74) Representative: Dehns

(57) **Abstract**

A helmet (200) for a space suit includes a transparent section (210) located at a front (206) of the helmet. The transparent section includes a base glass (232) having an inner surface (232a) located on an inside (202) of the helmet and an outer surface (232b) located on an outside (208) of the helmet, and a photochromatic transition glass (230). All or a portion, less than all, of the base glass is overlapped by the photochromatic transition glass. The helmet also includes a non-transparent section (220) located at a back (204) of the helmet.

## Description

### BACKGROUND

The embodiments herein generally relate to space exploration equipment and more specifically, to a photochromatic transition glass for a helmet of a space suit.

Space explorers are tasked with exploring or visiting planets, moons, asteroids, or other celestial bodies. A space explorer may be an astronaut or any wearer of a space suit that includes various components and life support functions.

### BRIEF SUMMARY

In one exemplary embodiment, a helmet for a space suit includes a transparent section located at a front of the helmet. The transparent section includes a base glass having an inner surface located on an inside of the helmet and an outer surface located on an outside of the helmet and a photochromatic transition glass. All or a portion, less than all, of the base glass is overlapped by the photochromatic transition glass. The helmet also includes a non-transparent section located at a back of the helmet.

In addition to one or more of the features described herein, a curvature of the base glass is controlled.

In addition to one or more of the features described herein, the portion of the base glass is overlapped by the photochromatic transition glass.

In addition to one or more of the features described herein, the portion is located in a field of vision of the space explorer.

In addition to one or more of the features described herein, the photochromatic transition glass is located on the inside of the helmet.

In addition to one or more of the features described herein, the photochromatic transition glass is attached to the inner surface of the base glass.

In addition to one or more of the features described herein, the photochromatic transition glass is located on the outside of the helmet.

In addition to one or more of the features described herein, the photochromatic transition glass is attached to the outer surface of the base glass.

In addition to one or more of the features described herein, the photochromatic transition glass is embedded within the base glass.

In another exemplary embodiment, a method of manufacturing a helmet for a space suit of a space explorer includes overlapping all or a portion, less than all, of a base glass with a photochromatic transition glass to form a transparent section. The method also includes attaching the transparent section to a front of the helmet.

In addition to one or more of the features described herein, all of the base glass is overlapped by the photochromatic transition glass.

In addition to one or more of the features described herein, the portion of the base glass is overlapped by the photochromatic transition glass.

In addition to one or more of the features described herein, the portion is located in a field of vision of the space explorer.

In addition to one or more of the features described herein, the photochromatic transition glass is located on an inside of the helmet.

In addition to one or more of the features described herein, the method also includes attaching the photochromatic transition glass to an inner surface of the base glass located on the inside of the helmet.

In addition to one or more of the features described herein, the photochromatic transition glass is located on an outside of the helmet.

In addition to one or more of the features described herein, the method also includes attaching the photochromatic transition glass to an outer surface of the base glass located on the outside of the helmet.

In addition to one or more of the features described herein, the method also includes embedding the photochromatic transition glass within the base glass.

In addition to one or more of the features described herein, the method also includes controlling a curvature of the base glass.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1 is a schematic view of a space explorer;
FIG. 2 is a schematic view of a helmet for the space explorer, according to an embodiment of the present disclosure;
FIG. 3 is a schematic view of a helmet for the space explorer, according to an embodiment of the present disclosure;
FIG. 4 is a cross-sectional view of a transparent section for the helmet, according to an embodiment of the present disclosure;
FIG. 5 is a cross-sectional view of a transparent section for the helmet, according to an embodiment of the present disclosure;
FIG. 6 is a cross-sectional view of a transparent section for the helmet, according to an embodiment of the present disclosure; and
FIG. 7 is a flow diagram illustrating a flow diagram of a method of manufacturing the helmet, according to an embodiment of the present disclosure.

### DETAILED DESCRIPTION

A detailed description of one or more embodiments of the disclosed apparatus and method are presented herein by way of exemplification and not limitation with reference to the Figures.

The embodiments of the method and apparatus detailed herein relate to incorporating a photochromatic transition glass into a helmet of a space suit. As aforementioned, space explorers may require a space suit to be in environments that are otherwise uninhabitable. Generally, a space suit may include a body suit, as well as gloves and a helmet that attach to the body suit, to create a habitable environment within the space suit for the wearer. A primary life support system (PLSS) and display and control module (DCM) may be attached to the space suit to control and facilitate life support functions. A space explorer may have difficultly seeing when facing towards the sun or any light generating body. Because the helmet of a space suit is fixed to the body suit, the wearer's head moves inside the bubble-shaped helmet, independent of the helmet. This is unlike a motorcycle helmet, for example, which moves with the wearer's head. Thus, turning away from the sun in the helmet of a space suit necessitates moving the whole space suit (i.e., the body of the wearer). Conventionally, a space suit helmet may include an opaque visor which must be slid up and down to block sunlight. This task of moving the visor up and down may prove to be cumbersome with gloves on and the visor may limit the range of vision. According to one or more embodiments detailed herein, the helmet of the space suit includes photochromatic transition glass to address these issues. While a space suit is specifically discussed for explanatory purposes, the helmet of any atmospheric suit (i.e., a suit that maintains a habitable environment within) may benefit from the embodiments that are discussed. For example, helmets of atmospheric suits that are used in earth-based (e.g., in a hazmat suit or contamination suit) or high-altitude (e.g., in a flight suit) applications may also include the photochromatic transition glass, as detailed.

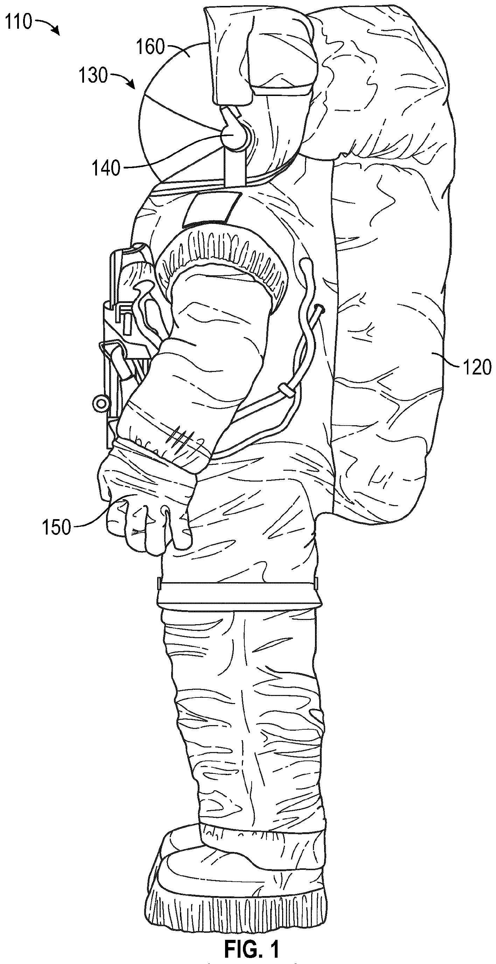

Referring to FIG. 1, an isometric view of a conventional space suit 110 is illustrated. The space suit 110 may include a primary life support system 120 to be worn on a back of the space explorer and a helmet 130 to be worn on a head of the space explorer. A knob 140 is conventionally located on a side of the helmet 130 as illustrated in FIG. 1. The space explorer is required to actuate the knob 140 while wearing gloves 150 in order to raise and lower a sun visor 160. As aforementioned, it may be difficult for the space explorer to rotate the knob 140 while wearing the gloves 150.

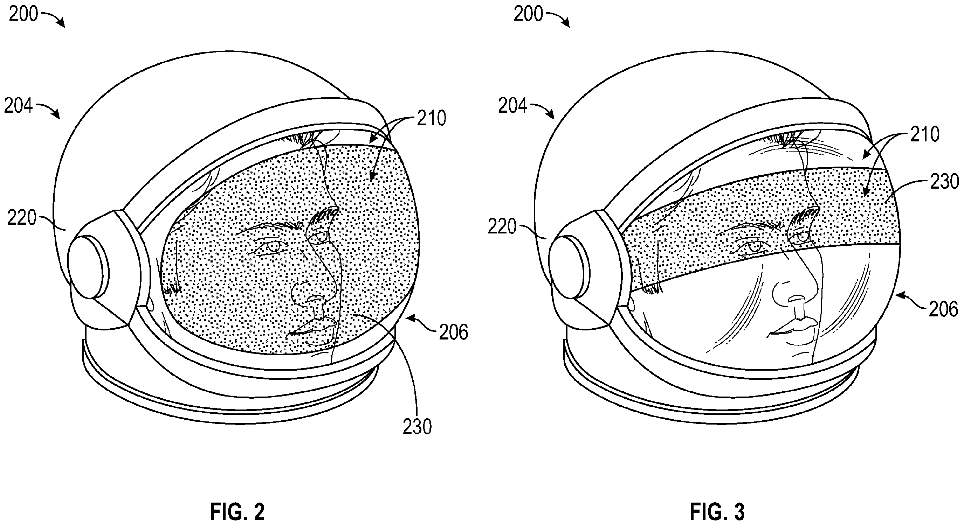

FIGS. 2 and 3 illustrate a helmet 200 to be incorporated in the space suit 110 of FIG. 1 according to one or more embodiments. The helmet 200 shown in FIGS. 2 and 3 is configured to replace the helmet 130 of FIG. 1 in the space suit 110 of FIG. 1. The helmet 200 includes a front 206 and a back 204 opposite the front 206. A transparent section 210 is located at the front 206 of the helmet 200 so that the space explorer may visually see through the front 206 of the helmet 200. A non-transparent section 220 may be located at the back 204 of the helmet 200. Alternatively, the transparent section 210 may extend from the front 206 to the back 204, completely around the helmet 200.

In the embodiment illustrated in FIG. 2, an entirety or most of the transparent section 210 may include a photochromatic transition glass 230. Because the space explorer's head moves independently of the helmet 200, having the photochromatic transition glass 230 over most or all of the transparent section 210 facilitates free movement of the wearer's head within the helmet 200. That is, the space explorer is less likely to be exposed to unfiltered light entering the helmet 200 from an unprotected area of the transparent section 210. In the embodiment illustrated in FIG. 3, only a portion of transparent section 210 may include the photochromatic transition glass 230. For example, as illustrated in FIG. 3, the portion of the transparent section 210 that includes the photochromatic transition glass 230 may be located in a field of vision of the space explorer under typical circumstances. This may reduce the amount of photochromatic transition glass 230 required.

The photochromatic transition glass 230 is configured to automatically tint when exposed to a selected amount of light to reduce or block the light entering the transparent section 210 where the photochromatic transition glass 230 is located. The photochromatic transition glass 230 includes photochromatic materials that change color when exposed to light (e.g., ultra-violet light), which darkens or shades the photochromatic transition glass 230. The photochromatic reaction is reversible, so the materials reverse color in the absence of certain wavelengths of light. Thus, when not exposed to a light source (e.g., sunlight), the photochromatic transition glass 230, like the rest of the transparent section 210, is not darkened. Advantageously, the shading of the photochromatic transition glass 230 occurs automatically when the photochromatic transition glass 230 is exposed to light and the space explorer does not need to take any manual action. Also advantageously, the shading of the photochromatic transition glass 230 occurs automatically when the photochromatic transition glass 230 is exposed to light without a need for electricity. The fact that the photochromatic transition glass 230 does not require power to provide the shading is particularly advantageous because power need not be diverted from the life support components that require it.

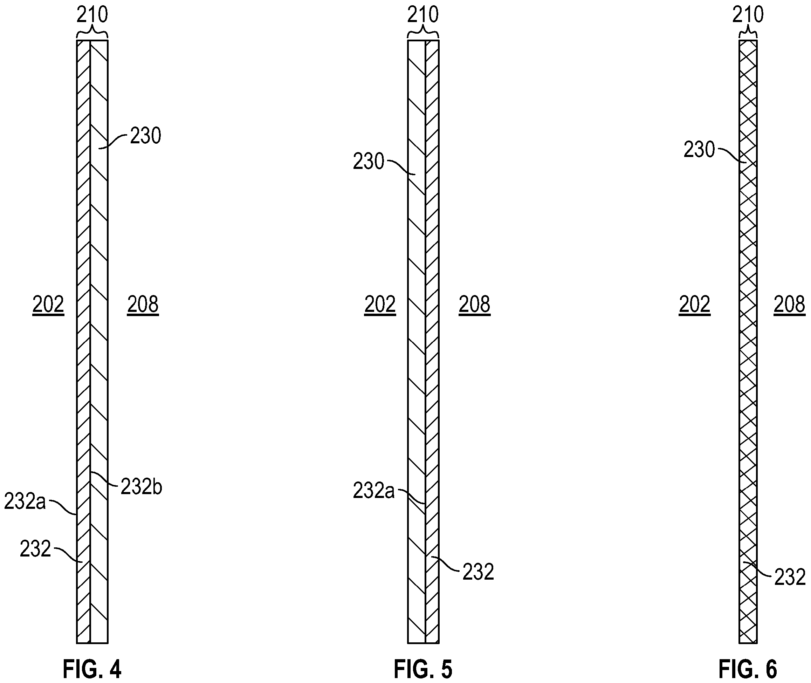

Referring now to FIGS. 4, 5, and 6, a location of the photochromatic transition glass 230 relative to an inside 202 and an outside 208 of the helmet 200 is illustrated in accordance with different exemplary embodiments.

As illustrated in FIG. 4, the photochromatic transition glass 230 may be located on an outside of the helmet 200. The transparent section 210 of the helmet 200 may include a base glass 232 and photochromatic transition glass 230. The base glass 232 (e.g., a polycarbonate) may include an inner surface 232a on the inside 202 of the helmet 200 and an outer surface 232b, opposite the inner surface 232a. As illustrated in FIG. 4, the photochromatic transition glass 230 may be attached to the outer surface 232b of the base glass 232

As illustrated in FIG. 5, the photochromatic transition glass 230 may be located on an inside 202 of the helmet 200. Specifically, as shown, the photochromatic transition glass 230 may be attached to the inner surface 232a of the base glass 232. Certain temperature ranges may affect how fast the photochromatic transition glass 230 can transition for clear to shaded. Higher temperature ranges, low temperature ranges, or even rapid temperature changes may affect (e.g., delay) this transition. It may be advantageous to place the photochromatic transition glass 230 on the inside 202 of the helmet 200 (as in the embodiment of FIG. 4) to maintain the photochromatic transition glass 230 at a controlled temperature range, which is maintained within the helmet 200 and space suit 110 for the wearer, and minimize rapid temperature changes.

As illustrated in FIG. 6, the photochromatic transition glass 230 may alternatively be embedded within the base glass 232. According to any of the embodiments of FIGS. 4, 5, or 6, the curvature of the base glass 232 may be controlled to match a prescription needed by the particular space explorer who will don the helmet 200. According to this exemplary embodiment, a space explorer who typically wears contacts or eyeglasses may see through the transparent section 210 of the helmet 200 without them.

All or a portion of base glass 232 may be overlapped by the photochromatic transition glass 230. As aforementioned, the photochromatic transition glass 230 may only overlap the base glass 232 in an area of a field of vision of the space explorer (according to the embodiment of FIG. 3).

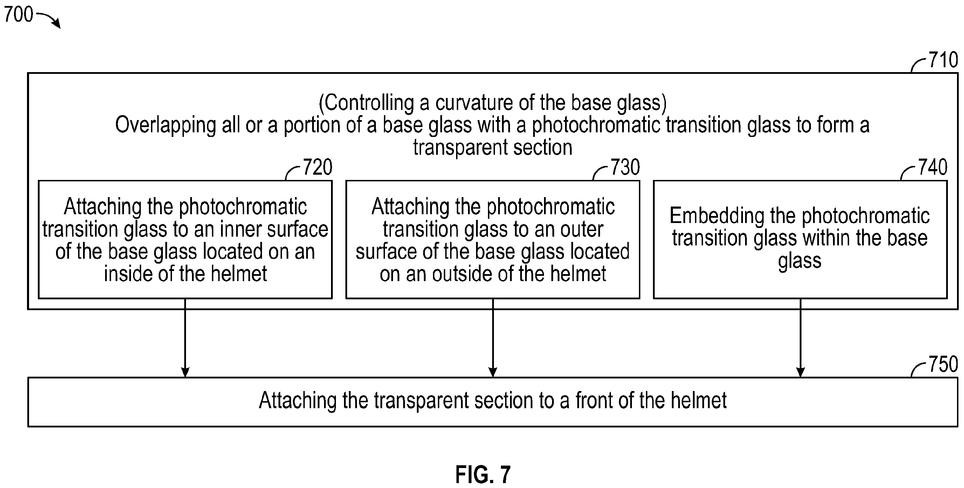

FIG. 7 shows a process flow of a method 700 of assembling a helmet 200 for a space suit 110 (or other atmospheric suit) of a space explorer according to one or more embodiments.

At block 710, all or a portion of a base glass 232 is overlapped with a photochromatic transition glass 230 to form a transparent section 230. Optionally, the curvature of the base glass 232 may be controlled to correct the vision of the wearer of the helmet 200. According to an exemplary embodiment, as shown in FIG. 2, all of the base glass 232 is overlapped by the photochromatic transition glass 230. According to an alternate embodiment, as shown in FIG. 3, a portion of the base glass 232 is overlapped by the photochromatic transition glass 230. As discussed with reference to FIGS. 4 and 5, the overlap may be in the form of layers. As discussed with reference to FIG. 6, the overlap may be via embedding of the photochromatic transition glass 230 within the base glass 232.

That is, the processes at block 710 may be composed of the processes at block 720, block 730, or block 740. At block 720, the photochromatic transition glass 230 is attached to the inner surface 232a of the base glass 232 such that the photochromatic transition glass 230 is located on the inside 202 of the helmet 200, as shown in FIG. 4. At block 730, the photochromatic transition glass 230 is attached to the outer surface 232b of the base glass 232 such that the photochromatic transition glass 230 is located on the outside 208 of the helmet 200, as shown in FIG. 5. At block 740, the photochromatic transition glass 230 is embedded within the base glass 232.

At block 750, the processes include attaching the transparent section 210, all or some of which includes the photochromatic transition glass 230, to a front 206 of the helmet 200.

While the above description has described the flow process of FIG. 7 in a particular order, it should be appreciated that unless otherwise specifically required in the attached claims that the ordering of the steps may be varied.

Technical effects and benefits of the features described herein include incorporating photochromatic transition glass into a transparent section of a helmet for a space explorer to help block or reduce light penetration as needed through the transparent section and into the helmet.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A helmet (200) for a space suit, the helmet comprising:
a transparent section (210) located at a front (206) of the helmet, the transparent section comprising:
a base glass (232) having an inner surface (232a) located on an inside (202) of the helmet and an outer surface (232b) located on an outside (208) of the helmet;
a photochromatic transition glass (230), wherein all or a portion, less than all, of the base glass is overlapped by the photochromatic transition glass; and
a non-transparent section (220) located at a back (204) of the helmet.

2. The helmet of claim 1, wherein a curvature of the base glass (232) is controlled.

3. The helmet of claim 1 or 2, wherein the portion of the base glass (232) is overlapped by the photochromatic transition glass (230); optionally
wherein the portion is located in a field of vision of the space explorer.

4. The helmet of any preceding claim, wherein the photochromatic transition glass (230) is located on the inside (202) of the helmet; optionally wherein the photochromatic transition glass is attached to the inner surface (232a) of the base glass (232).

5. The helmet of any preceding claim, wherein the photochromatic transition glass (230) is located on the outside (208) of the helmet;
wherein the photochromatic transition glass is attached to the outer surface (232b) of the base glass (232).

6. The helmet of any preceding claim, wherein the photochromatic transition glass (230) is embedded within the base glass (232).

7. A method (700) of manufacturing a helmet for a space suit of a space explorer, comprising:
overlapping (710) all or a portion, less than all, of a base glass with a photochromatic transition glass to form a transparent section; and
attaching (750) the transparent section to a front of the helmet.

8. The method of claim 7, wherein all of the base glass is overlapped by the photochromatic transition glass.

9. The method of claim 7, wherein the portion of the base glass is overlapped by the photochromatic transition glass, optionally wherein the portion is located in a field of vision of the space explorer.

10. The method of any of claims 7 to 9, wherein the photochromatic transition glass is located on an inside of the helmet.

11. The method of claim 10, further comprising attaching (720) the photochromatic transition glass to an inner surface of the base glass located on the inside of the helmet.

12. The method of any of claims 7 to 11, wherein the photochromatic transition glass is located on an outside of the helmet.

13. The method of claim 12, further comprising attaching (730) the photochromatic transition glass to an outer surface of the base glass located on the outside of the helmet.

14. The method of any of claims 7 to 13, further comprising embedding (740) the photochromatic transition glass within the base glass.

15. The method of any of claims 7 to 14, further comprising controlling a curvature of the base glass.
